# DEMANDE DE BREVET EUROPEEN

(11) **EP 1 125 775 A1**
(43) Date de publication de la demande: **22.08.2001**
(21) Numéro de dépôt: 01400404.8
(22) Date de dépôt: 15.02.2001
(51) Int. Cl.: B60G 9/00, B60G 21/05

(54) **Procédé de fixation d'un bras de suspension sur un essieu et essieu pourvu de bras de suspension fixés selon ce procédé**

(30) Priorité: 17.02.2000 FR 0001978
(71) Demandeur: General Trailers France, 91130 Ris Orangis (FR)
(72) Inventeur: Vanryckeghem, Charles, 10130 Racines (FR)
(74) Mandataire: Michelet, Alain

(57) **Abrégé**

L'invention concerne un procédé de fixation d'un bras de suspension d'un véhicule industriel sur un essieu sans soudure.

Selon ce procédé on usine un bras de suspension (1) ayant un alésage (3) destiné à recevoir le corps d'un essieu (4), et le corps d'essieu (4) de façon que le diamètre extérieur du corps d'essieu (4) soit plus grand que celui de l'alésage (3), et ensuite on introduit le corps d'essieu (4) dans l'alésage (3) de façon à obtenir une liaison frettée.

L'invention concerne également un essieu ainsi obtenu.

## Description

L'invention concerne un procédé de fixation d'un bras de suspension d'un véhicule industriel sur un essieu et un essieu d'un véhicule industriel pourvu de bras de suspension fixés selon ce procédé.

Sur des véhicules industriels tels que les remorques et les semi-remorques, les essieux sont montés sur le châssis ou sur la structure portante, au moyen de bras de suspension. Chacun des essieux est pourvu de deux bras de suspension. Les liaisons entre les bras de suspension et l'essieu doivent résister à la fois aux contraintes longitudinales par rapport à l'axe de l'essieu, et aux contraintes de rotation exercées par les roues. Pour éviter que l'essieu soit entraîné en rotation par les roues ou que l'essieu soit déplacé latéralement par rapport à la direction d'avancement du véhicule, les bras de suspension sont montés rigidement sur l'essieu. Dans le cas de corps d'essieu cylindriques de révolution, cet assemblage est réalisé fréquemment par une semelle soudée sur le corps d'essieu et un étrier serrant le bras de suspension sur le corps d'essieu. Une autre technique consiste à souder le bras de suspension sur le corps d'essieu, généralement en y interposant des cales soudées aussi bien sur le bras de suspension que sur le corps d'essieu. Ces deux principes ont fait leurs preuves.

Cependant, toute liaison soudée est une liaison à risque du fait des changements internes métallurgiques que la soudure entraîne. De plus, les liaisons soudées sont des liaisons locales dans le sens qu'elles concentrent tous les efforts de la liaison sur des points de soudure ou sur des cordons de soudure. Différentes solutions ont été recherchées pour trouver une meilleure répartition des efforts. Une de ces solutions consiste en un dispositif décrit dans le document FR-A-2.705.282. Ce dispositif comprend un berceau fixé sur le bras de suspension et destiné à recevoir et à tenir en position le corps d'essieu. Le berceau comporte à cet effet deux joues entourant le corps d'essieu et coopérant avec un ou plusieurs éléments d'assemblage soudés sur le corps d'essieu le long de leur pourtour entier. Ici encore, bien que les efforts soient assez bien répartis, les efforts sont essentiellement concentrés sur les cordons de soudure.

Le but de l'invention est de proposer une liaison exempte de soudures, d'un bras de suspension sur un essieu et/ou un procédé de fixation d'un bras de suspension sur un essieu permettant de s'affranchir des soudures.

Le but de l'invention est atteint par un procédé de fixation d'un bras de suspension d'un véhicule industriel sur un essieu, comprenant les étapes: usiner un bras de suspension ayant un alésage destiné à recevoir le corps d'un essieu, et le corps d'essieu de façon que le diamètre extérieur du corps d'essieu soit plus grand que celui de l'alésage et introduire le corps d'essieu dans l'alésage de façon à obtenir une liaison frettée.

Le frettage est une technique d'assemblage permettant de bloquer le déplacement de deux pièces de révolution entre elles par déformation élastique des matériaux. L'introduction de l'essieu dans l'alésage du bras de suspension et la déformation élastique des matériaux respectivement de l'essieu et du bras de suspension peuvent être mises en oeuvre essentiellement selon deux modes de mise en oeuvre différents.

Selon un premier mode de mise en oeuvre du procédé défini ci-avant, préalablement à l'introduction du corps d'essieu dans l'alésage, le corps d'essieu est refroidi et le bras de suspension est chauffé. Après assemblage, le corps d'essieu est maintenu dans l'alésage jusqu'à ce que les températures des deux éléments se soient égalisées.

Avantageusement, le corps d'essieu est refroidi à une température de l'ordre de - 150°C et le bras de suspension est chauffé à une température de l'ordre de 200°C.

Le corps d'essieu peut être refroidi au moyen d'azote liquide.

En ce qui concerne le bras de suspension, celui-ci peut être chauffé au moyen d'un four thermique ou, en variante, par induction.

Le refroidissement et l'échauffement respectivement de l'essieu et du bras de suspension doivent être effectués de façon que la différence entre le diamètre extérieur du corps d'essieu et le diamètre de l'alésage au moment de l'introduction du corps d'essieu dans l'alésage soit de l'ordre de 0,3 mm.

Pour renforcer les effets de frettage, la surface de l'alésage et la surface du corps d'essieu ont, dans la zone de contact, une rugosité Rₐ égale ou supérieure à 0,4 µm.

Un autre moyen pour renforcer les effets du frettage consiste à enduire, préalablement à l'introduction du corps d'essieu dans l'alésage, l'une au moins des surfaces à mettre en contact, à savoir la surface d'alésage et/ou la surface du corps d'essieu, d'une colle.

Selon un second mode de mise en oeuvre, la liaison frettée entre le corps d'essieu et le bras de suspension est obtenue par l'introduction du corps d'essieu dans l'alésage du bras de suspension, au moyen d'une presse.

Pour ce second mode de mise en oeuvre, la différence entre le diamètre extérieur du corps d'essieu et le diamètre de l'alésage du bras de suspension doit être d'environ 0,35 mm.

Pour renforcer l'effet de frettage, la surface de l'alésage et la surface du corps d'essieu doivent avoir, dans la zone de contact, une rugosité Rₐ égale ou supérieure à 0,3 µm.

Selon une variante, le corps d'essieu et l'alésage présentent, dans la zone de contact, une conicité de l'ordre de 5/100.
Le procédé selon l'invention présente plus particulièrement les avantages suivants:
- Réduction des contraintes internes dans l'essieu et dans le bras de suspension grâce à l'absence de soudures.
   En effet, la réalisation d'une soudure diminue la tenue à la fatigue des pièces soudées du fait de la création d'une zone affectée thermiquement, zone dans laquelle les caractéristiques mécaniques des matériaux sont altérées.
- L'assemblage est plus rapide car une liaison frettée ne prend que le temps de positionner les pièces correctement l'une par rapport à l'autre. Contrairement à cela, les opérations de soudure nécessitent un temps important pour le dépôt du métal.
- La plus grande rapidité du procédé d'assemblage selon l'invention permet d'augmenter les capacités de production et, en même temps, de réduire les coûts de production.
- Un autre avantage relève de la comparaison entre un assemblage mixte avec étrier, et l'assemblage selon l'invention. Un assemblage mixte avec étrier consiste à souder sur le bras de suspension au moins une semelle sur laquelle doit reposer le corps d'essieu et à mettre en place un étrier sous forme d'une vis pliée sur elle-même, donc en forme de U. Cet étrier est destiné à entourer le corps d'essieu et à passer au travers de la semelle et du bras de suspension pour assurer le maintien de l'ensemble de ces pièces entre elles. En général, le bras de suspension est pourvu du côté opposé par rapport à celui sur lequel est monté le corps d'essieu, d'une bride sur laquelle s'appuie les écrous de l'étrier et qui reprendra notamment la force de serrage de ces écrous.

L'importance des avantages apportés par l'invention est d'autant plus grand que les essieux des véhicules industriels sont fixés sur le châssis ou sur tout autre partie portante du véhicule, par deux bras de suspension. Le gain de temps obtenu par la mise en oeuvre du procédé de l'invention est donc double pour chaque essieu.

Le procédé de fixation selon l'invention s'applique principalement à des essieux dont le corps est constitué par un tube cylindrique de révolution, car ceux-ci correspondent au type d'essieu le plus souvent utilisé. De plus, l'invention est mise à profit le mieux avec ce type d'essieu, car - rappelons-le - le frettage est une technique d'assemblage qui permet de bloquer à la fois la translation et la rotation d'une pièce par rapport à l'autre pièce avec laquelle elle est assemblée. Cependant, l'invention peut être appliqué de la même façon à tout autre type d'essieu, quelque soit la forme géométrique de la section transversale du corps d'essieu. Il est bien entendu que pour la plupart de ces autres types 'd'essieu, par exemple, lors de l'utilisation d'un corps d'essieu à section transversale carrée, l'application de l'invention apporte un double blocage en rotation des pièces. Mais dans de tels cas, le blocage de la translation des pièces sans avoir besoin de souder, justifie l'application.

Le but de l'invention est également atteint par un essieu d'un véhicule industriel pourvu de bras de suspension, caractérisé en ce que les corps d'essieux sont fixés l'un sur l'autre par une liaison frettée.

D'autres caractéristiques et avantages de l'invention ressortiront de la description d'un mode de mise en oeuvre décrit en référence aux dessins. Dans ces dessins,
- la Figure 1 représente, en coupe transversale, un bras de suspension fixé par frettage selon l'invention sur le corps d'un essieu, et
- la Figure 2 représente, en coupe longitudinale, le corps d'un essieu déformé par frettage selon l'invention.

Le bras de suspension 1 destiné à être utilisé pour une liaison frettée selon l'invention est formé en un seul bloc avec une partie latérale 2 qui est pourvue d'un alésage 3 destiné à recevoir un corps d'essieu 4.

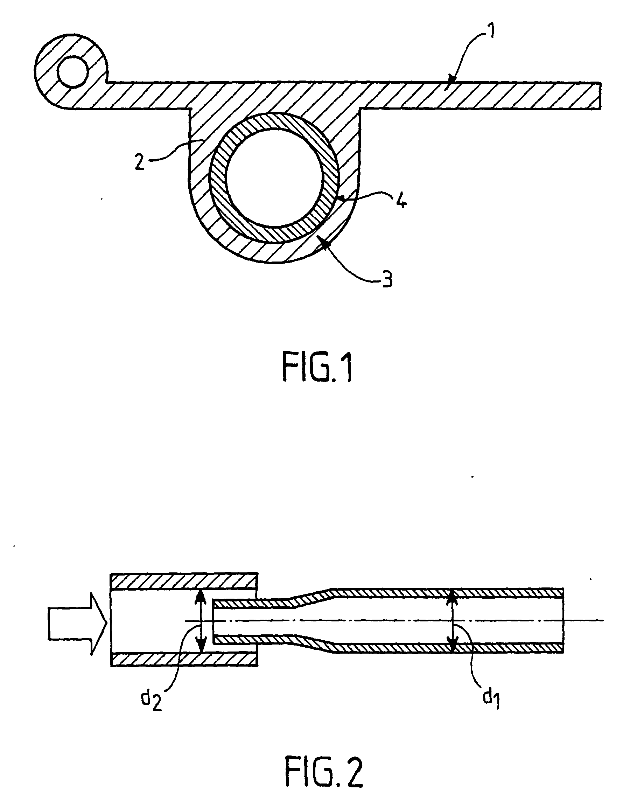

Selon l'exemple représenté sur la Figure 2, un tube rond constituant le corps d'essieu 4 et ayant un diamètre nominal de 127 mm, est usiné de façon à lui donner un diamètre extérieur d₁ de 125,3 mm (tolérance plus 0,025 mm). Après introduction dans l'alésage 3, il est produit un serrage de l'ordre de 3/10 de mm entre le diamètre extérieur d₁ du tube et le diamètre intérieur d₂ du bras, ce qui a pour effet de réduire le diamètre extérieur du tube et d'augmenter de diamètre intérieur de l'alésage vers un diamètre compris entre les deux cotes initiales.

L'épaisseur de la paroi du corps d'essieu et l'épaisseur du bras de suspension influent sur la liaison de la façon suivante:
- corps d'essieu:
   au-delà d'une épaisseur de la paroi de l'ordre de 16 mm, celle-ci n'a plus d'influence;
- l'alésage:
   l'influence de l'épaisseur du matériau entourant l'alésage est double:
   = plus l'épaisseur diminue, plus les contraintes liées à la déformation élastique sont élevées, les limites étant fixées par les lois de comportement des matériaux; et
   = plus l'épaisseur diminue, plus le bras est élastique et peut donc s'expandre; dans ce cas le serrage effectif sur l'essieu va tendre a diminuer.
Dans le cadre de la présente invention, la combinaison de ces deux facteurs nécessite une épaisseur minimale de 10 mm.

Le serrage obtenu par frettage permet de transmettre un couple de l'ordre de 5000 m·DaN.

Les valeurs indiquées dans la Figure 2 concernent la mise en oeuvre de la liaison frettée selon le premier mode de réalisation décrit plus haut, à savoir l'introduction du corps d'essieu dans l'alésage du bras de suspension après refroidissement du corps d'essieu et chauffement du bras de suspension.

Si par contre l'essieu doit être introduit dans l'alésage du bras de suspension selon le second mode de mise en oeuvre décrit plus haut, c'est-à-dire par un emmanchement en force, au moyen d'une presse, les cotes d'usinage indiquées ci-avant doivent être adaptées pour prendre en compte le lissage des surfaces mises en contact sur toute la longueur du chemin d'emmanchement, lissage qui se produit principalement par des déformations élastiques et plastiques des pièces venant en contact.

## Revendications

1. Procédé de fixation d'un bras de suspension d'un véhicule industriel sur un essieu, caractérisé en ce qu'il comprend les étapes:
• usiner un bras de suspension ayant un alésage destiné à recevoir le corps d'un essieu, et le corps d'un essieu de façon que le diamètre extérieur du corps d'essieu soit plus grand que celui de l'alésage, et
• introduire le corps d'essieu dans l'alésage de façon à obtenir une liaison frettée.

2. Procédé selon la revendication 1, caractérisé en ce que, préalablement à l'introduction du corps d'essieu dans l'alésage,
• le corps d'essieu est refroidi, et
• le bras de suspension est chauffé.

3. Procédé selon la revendication 2, caractérisé en ce que
• le corps d'essieu est refroidi à une température de l'ordre de - 150°C, et
• le bras de suspension est chauffé à une température de l'ordre de 200°C.

4. Procédé selon la revendication 2 ou 3, caractérisé en ce que la différence entre le diamètre extérieur du corps d'essieu et le diamètre de l'alésage, au moment de l'introduction du corps d'essieu dans l'alésage, est de l'ordre de 0,3 mm.

5. Procédé selon l'une quelconque des revendications 2 à 4, caractérisé en ce que, préalablement à l'introduction du corps d'essieu dans l'alésage, l'une au moins des surfaces à mettre en contact, à savoir la surface de l'alésage et/ou la surface du corps d'essieu est enduite d'une colle.

6. Procédé selon l'une quelconque des revendications 2 à 5, caractérisé en ce que la surface de l'alésage et la surface du corps d'essieu ont, dans la zone de contact, une rugosité Rₐ égale ou supérieure à 0,4 µm.

7. Procédé selon la revendication 1, caractérisé en ce que l'introduction du corps d'essieu dans l'alésage est effectuée au moyen d'une presse.

8. Procédé selon la revendication 7, caractérisé en ce que la différence entre le diamètre extérieur du corps d'essieu et le diamètre de l'alésage est de l'ordre de 0,35 mm.

9. Procédé selon la revendication 7 ou 8, caractérisé en ce que la surface de l'alésage et la surface du corps d'essieu ont, dans la zone de contact, une rugosité Rₐ égale ou supérieure à 0,35 µm.

10. Procédé selon l'une quelconque des revendications 7 à 9, caractérisé en ce que le corps d'essieu et l'alésage présentent, dans la zone de contact, une conicité de l'ordre de 5/100.

11. Essieu d'un véhicule industriel pourvu d'un bras de suspension, caractérisé en ce que le corps d'essieu et les bras de suspension sont fixés l'un sur l'autre par une liaison frettée.
